# EUROPÄISCHE PATENTSCHRIFT

(11) **EP 1 428 420 B1**
(45) Veröffentlichungstag und Bekanntmachung des Hinweises auf die Patenterteilung: **16.01.2013**
(21) Anmeldenummer: 02102733.9
(22) Anmeldetag: 12.12.2002
(51) Int. Cl.: A01C 7/04

(54) **Messsystem zum Abmessen von Saatgut**
Seed Metering System
Système doseur d'un semoir

(30) Priorität: 18.12.2001 US 21584
(43) Veröffentlichungstag der Anmeldung: 16.06.2004
(73) Patentinhaber: DEERE & COMPANY, Moline, Illinois 61265-8098 (US)
(72) Erfinder: Hagen, Matthew, Brian, Bettendorf, IA 52722 (US); Lodico, James, Irwin, Hampton, IL 61256 (US)
(74) Vertreter: Holst, Sönke

(56) Entgegenhaltungen:
- EP-A- 0 193 833
- US-A- 4 162 744
- US-A- 5 058 766
- US-A- 5 325 800
- US-A- 5 740 746

## Beschreibung

Die Erfindung betrifft ein Messsystem zum Abmessen von Saatgut, mit einem Gehäuse, einer im Gehäuse angeordneten Säscheibe, einem Einlass im Gehäuse zum Empfang von Saatgut, das an einer Seite der Säscheibe einen Saatguthügel bildet, einem Auslass des Gehäuses, durch den zugemessenes Saatgut abgegeben wird, einer ersten am Gehäuse befestigten Bürste, die sich nach unten und radial nach innen entlang der Säscheibe erstreckt, wobei ein Teil des Saatguts im Saatguthügel in einem von der ersten Bürste geformten Transport-Saatguthügel gehalten wird, wenn das Messsystem aus einer horizontalen Arbeitsposition in eine vertikale Transportposition verschwenkt wird, wobei das Gehäuse ferner mit einer trennenden Bürste ausgestattet ist, die sich in der Art einer Sehne entlang der Säscheibe zum Auslass erstreckt und eine Abgabezone des Messsystems definiert, wobei die erste Bürste und die trennende Bürste zusammentreffen und die Begrenzungen des Transport-Saatguthügels bilden.

Reihenpflanzgeräte sind Sämaschinen, die zum Pflanzen in Reihen angebauter Pflanzen verwendet werden. Typischerweise werden Reihenpflanzgeräte mit einer Anzahl an Pflanzeinheiten ausgestattet. Jede Pflanzeinheit umfasst einen Saatgutbehälter, ein Messsystem, einen Furchenöffner mit Tiefeneinstellrädern, Schließräder und ein Saatgutrohr. Der Saatgutbehälter führt dem Messsystem Saatgut zu. Das Messsystem misst wiederum das Saatgut ab und gibt das zugemessene Saatgut in das Saatgutrohr ab. Der Furchenöffner mit Tiefeneinstellrädern formt eine Pflanzfurche mit der richtigen Tiefe. Das abgemessene Saatgut wird durch das Saatgutrohr in die Pflanzfurche abgegeben. Die Pflanzfurche wird durch Schließräder geschlossen, die das Saatgut in der Pflanzfurche einschließen.

Messsysteme können mechanischen oder pneumatischen Typs sein. Pneumatische Messsysteme umfassen Vakuummesssysteme, in denen ein Unterdruck oder Vakuum verwendet wird, um Saatgut an eine Saatgutscheibe zu saugen, und Systeme mit Überdruck. Ein Messsystem mechanischen Typs ist in der US 5 720 233 A offenbart und ein Messsystem des Vakuumtyps ist in der US 4 836 412 A offenbart.

Den Einheiten zugeordnete Behälter an Pflanzeinheiten wurden bereits von einem Hauptbehälter mit Saatgut versorgt. Ein Beispiel eines derartigen Systems ist in der US 5 392 722 A offenbart.

Es ist außerdem bekannt, ein Messsystem abzudichten, während es von einer Arbeitsposition in eine Transportposition bewegt wird. Ein Beispiel dafür ist in der US 5 325 800 A offenbart.

Es ist auch bekannt, Pflanzeinheiten an ihren Nasen vertikal von einer horizontalen Arbeitsposition in eine vertikale Transportposition zu verschwenken.

Die der Erfindung zu Grunde liegende Aufgabe wird darin gesehen, ein verbessertes Messsystem bereitzustellen, bei dem das Saatgut im Messsystem verbleibt, wenn sie in ihre Transportposition verschwenkt wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter weise weiterentwickeln.

Erfindungsgemäß ist in einem Meßsystem der eingangs genannten Art eine zweite Bürste vorgesehen, die sich nach unten und radial nach innen entlang der Säscheibe erstreckt, wobei die erste Bürste und die zweite Bürste eine Saatgutrückkehrlücke bilden, durch die Saatgut vom oberen Abschnitt der Säscheibe zum Saatguthügel rückführbar ist. Das Messsystem misst Saatgut ab, bevor es in ein Saatgutrohr abgegeben wird, aus dem es in eine Pflanzfurche gelangt. Das abzumessende Saatgut bildet im Messsystem einen Saatguthügel oder -haufen. Eine Säscheibe ist in Drehung versetzbar und transportiert das Saatgut aus dem Saatguthügel in definierten Mengen zum Auslass. Wenn das Messsystem mit der zugehörigen Pflanzeinheit aus seiner horizontalen Arbeitsposition in seine vertikale Transportposition verschwenkt wird, wird ein Teil des Saatguts durch die erste Bürste im Messsystem festgehalten und bildet einen Transport-Saatguthügel. Mit der zweiten Bürste wird eine Lücke gebildet, durch die das Saatgut vom oberen Bereich der Säscheibe zum Saatguthügel hinunterfallen kann. Die beiden Bürsten erstrecken sich nach unten und radial nach innen entlang der Säscheibe.

Das erfindungsgemäße Messsystem findet vorzugsweise an Sämaschinen Verwendung, die einen Rahmen umfassen, der einen Hauptsaatgutbehälter und eine Reihe an Pflanzeinheiten trägt. Der Hauptsaatgutbehälter ist durch ein flexibles Rohr oder eine andere Leitung mit einer jeweiligen Pflanzeinheit verbunden. Die Pflanzeinheit umfasst in der Regel auch einen eigenen Behälter.

Es ist auch denkbar, dass die Pflanzeinheit nur einen ihr zugeordneten Behälter für Saatgut hat, wobei die Sämaschine keinen Hauptsaatgutbehälter umfasst.

In den Zeichnungen ist ein nachfolgend näher beschriebenes Ausführungsbeispiel der Erfindung dargestellt. Es zeigt:
- Fig. 1: eine Seitenansicht einer Sämaschine mit den Pflanzeinheiten in ihren horizontalen Arbeitspositionen,
- Fig. 2: eine Seitenansicht einer Sämaschine mit den Pflanzeinheiten in ihrer vertikalen Transportposition,
- Fig. 3: eine vergrößerte Seitenansicht des Messsystems und des Behälters der Pflanzeinheit,
- Fig. 4: ein perspektivischer teilweiser Querschnitt des Messsystems und des Behälters der Pflanzeinheit, und
- Fig. 5: eine Seitenansicht des Gehäuseelements des Messsystems der Pflanzeinheit, in der die Bürstenzusammenbauten illustriert sind.

Die Sämaschine 10 umfasst einen Rahmen 12, einen Hauptsaatgutbehälter 14, eine Pflanzeinheit 16 und ein flexibles Rohr 18. Im Hauptsaatgutbehälter 14 enthaltenes Saatgut wird durch die Schwerkraft durch das flexible Rohr 18 in die Pflanzeinheit 16 übertragen. Die Pflanzeinheit 16 umfasst einen Pflanzeinheitrahmen 20, an dem ein Behälter 22 der Pflanzeinheit 16 und ein Vakuummesssystem 24 angebracht sind. Obwohl nicht dargestellt, würde auch ein Furchenöffner mit Tiefeneinstellrädern an dem Pflanzeinheitrahmen 20 befestigt sein, wie auch ein Saatgutrohr und Schließräder. Der Furchenöffner würde verwendet, eine Pflanzfurche zu bilden. Das Saatgutrohr würde abgemessenes Saatgut von dem Messsystem 24 in die Pflanzfurche leiten. Die Schließräder würden die Pflanzfurche schließen und dass Saatgut in der Furche einschließen. Der Furchenöffner mit Tiefeneinstellrädern, das Saatgutrohr und die Schließräder sind konventionell und im Stand der Technik gut bekannt.

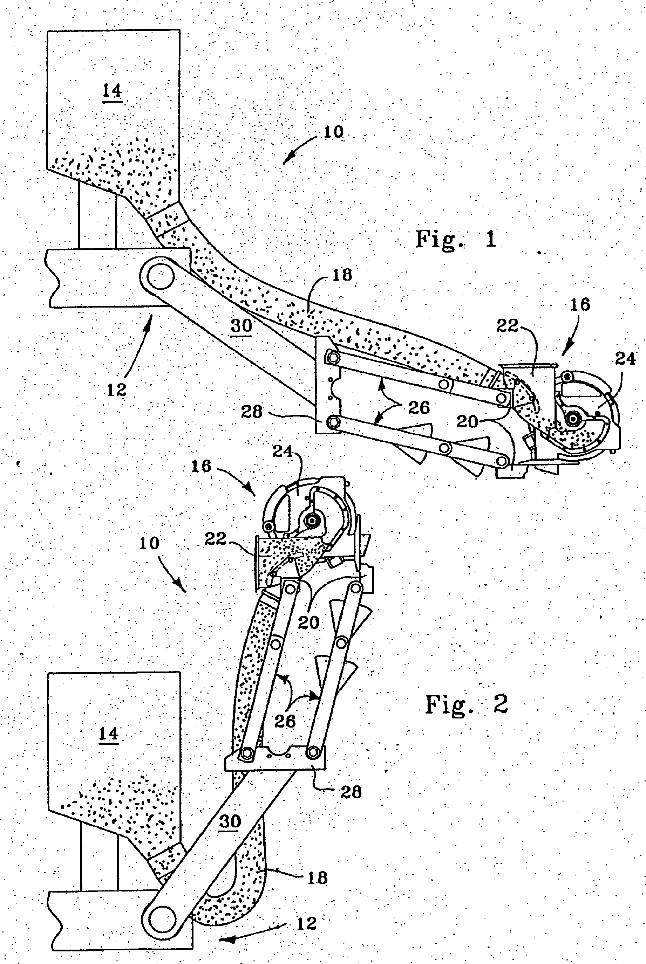

Die Pflanzeinheit 16 befindet sich, wie sie in Figur 1 dargestellt ist, in ihrer horizontalen Arbeitsposition. Um die Größe des Pakets beim Transport zu vermindern, kann die Pflanzeinheit 16 in ihre vertikale Transportposition verschwenkt werden, wie in Figur 2 dargestellt. Die Pflanzeinheit 16 ist außerdem mit einem Parallelogrammgestänge 26 ausgestattet, das sich zwischen dem Pflanzeinheitrahmen 20 und einer Befestigungsplatte 28 erstreckt. Die Befestigungsplatte 28 ist am Schwenkmechanismus 30 des Rahmens 12 befestigt. Das Parallelogrammgestänge 26 erlaubt der Pflanzeinheit 16, dem Boden zu folgen, wenn sie sich in ihrer horizontalen Arbeitsposition befindet.

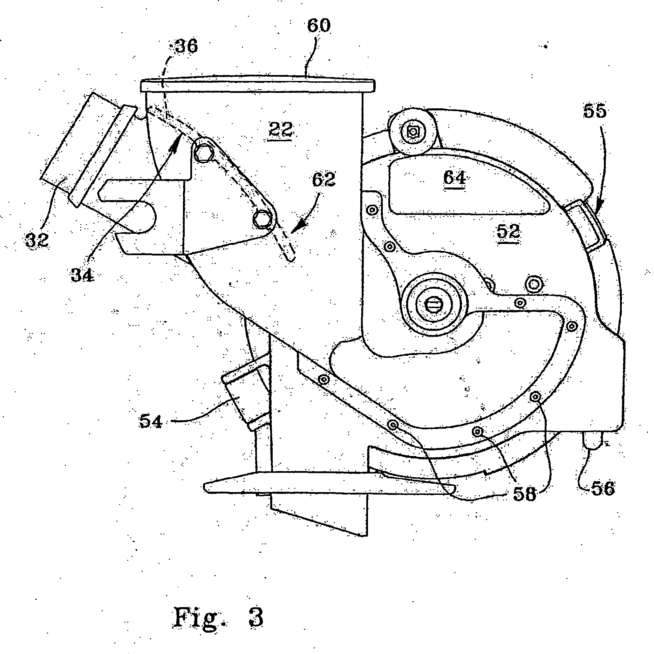

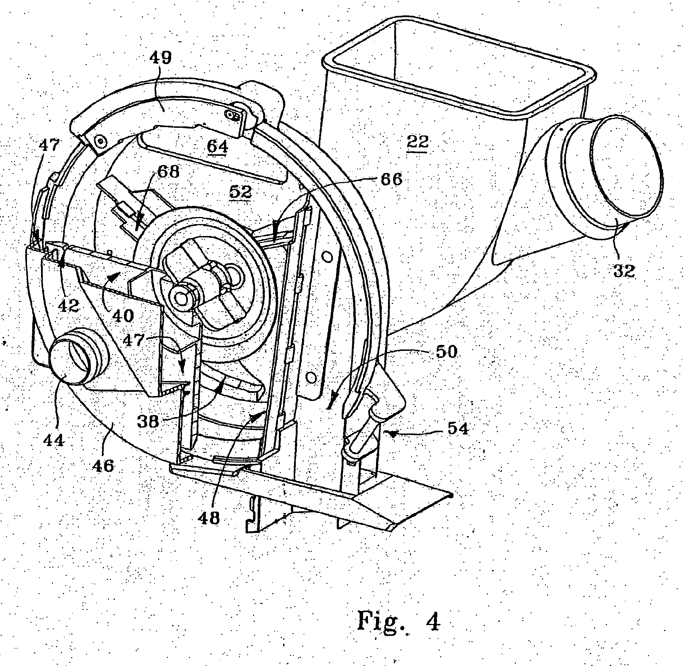

Die erfinderischen Merkmale der Pflanzeinheit 16 sind am Besten in den Figuren 3 und 4 illustriert. Saatgut vom Hauptbehälter 14 strömt durch das flexible Rohr 18 zum Behälter 22 der Pflanzeinheit 16. Der Behälter 22 ist mit einem Einlass 32 ausgestattet, der mit dem flexiblen Rohr 18 gekoppelt ist. Das Saatgut strömt unterhalb der konkaven Oberfläche 34 einer Leitwand 36 und durch den Eingangsdurchlass 38 in das Messsystem 24. Das Saatgut formt einen Saatguthügel an der Säscheibe 40. Die Säscheibe 40 ist eine konventionelle Vakuumsäscheibe, die mit einer Reihe in Umfangsrichtung beabstandeter Öffnungen 42 ausgestattet ist. Jede Öffnung 42 entspricht einer individuellen Saatgutzelle an der Säscheibe 40. Die Saatgutzellen kommen mit dem im Saatguthügel angeordneten Saatgut in Berührung.

Ein Vakuum oder Unterdruck wird auf die Seite der Säscheibe 40 angelegt, die dem Saatguthügel gegenüberliegt. Die Vakuumquelle ist typischerweise ein durch einen hydraulischen Motor angetriebener Ventilator, der das Vakuum durch Schläuche überträgt, die mit einem Fitting 44 verbunden sind, das am Vakuumgehäuseelement 46 des Messsystems 24 angeordnet ist. Eine Dichtung 47 ist am Vakuumgehäuseelement 46 befestigt. Die Dichtung 47 berührt die Säscheibe 40 und bildet mit ihr eine luftdichte Dichtung. Wie in Figur 4 erkennbar, dreht sich die Säscheibe 40 in der Uhrzeigerrichtung. Das Vakuum zieht Saatgut in die Saatgutzellen. Während sich die Saatgutzellen durch den Saatguthügel drehen, lagert sich Saatgut in den Saatgutzellen an und wird aus dem Saatguthügel nach oben gedreht. Ein Zwillingseliminator 49 zum Herausschlagen überschüssigen Saatguts aus den Saatgutzellen ist an der Oberseite des Messsystems angeordnet. Die einzelne Saatgutkörner enthaltenden Saatgutzellen werden dann entlang einer Bürste 48 in die Abgabezone 50 gedreht. In der Abgabezone 50 wird das Vakuum durch die Anordnung der luftdichten Dichtung 47 von den Öffnungen 42 abgesperrt. Das Beenden der Einwirkung des Vakuums gibt das Saatgut von der Säscheibe 40 frei. Das Saatgut bewegt sich durch die Abgabezone 50 durch die Schwerkraft nach unten aus dem Messsystem 24 hinaus in ein Saatgutrohr und in die Pflanzfurche.

Das Vakuumgehäuseelement 46 ist durch ein Scharnier 54 schwenkbar an das Gehäuseelement 52 des Behälters 22 der Pflanzeinheit 16 gekoppelt. Ein Riegel 55 ist dem Scharnier 54 gegenüber angeordnet und verriegelt das Vakuumgehäuseelement 46 mit dem Gehäuseelement 52 des Behälters 22. Das Gehäuseelement 52 des Behälters 22 der Pflanzeinheit 16 ist mit einem Ortungsknopf 56 ausgestattet. Der Ortungsknopf 56 erleichtert das Anbringen des Messsystems 24 und des Behälters 22 am Pflanzeinheitrahmen 20 der Pflanzeinheit 16.

Der Behälter 22 ist aus Kunststoff und durch Befestigungselemente 58 am Behältergehäuseelement 52 angebracht. Der Behälter 22 hat eine offene Oberseite, die durch einen abnehmbaren Deckel 60 geschlossen wird. Wenn die Pflanzeinheit 16 aus ihrer horizontalen Arbeitsposition in ihre vertikale Transportposition geschwenkt wird, fließt Saatgut im Messsystem 24 in Richtung auf das flexible Rohr 18. Saatgut aus dem Messsystem 24 fließt über die konvexe Oberfläche 62 der Leitwand 36 und wird im Behälter 22 der Pflanzeinheit 16 gehalten, wie in Figur 2 gezeigt.

Die Oberseite des Behältergehäuseelements 52 ist mit einer Öffnung 64 ausgestattet, durch die vom mit Vakuum betriebenen Messsystem 24 Luft gezogen wird. Diese Öffnung 64 ist typischerweise mit einem klaren Kunststofffenster ausgestattet, das Lamellen aufweist. Das klare Kunststofffenster stellt ein Inspektionsfenster für das Messsystem bereit. Das mit Lamellen versehene Fenster ist nicht in den Zeichnungen illustriert.

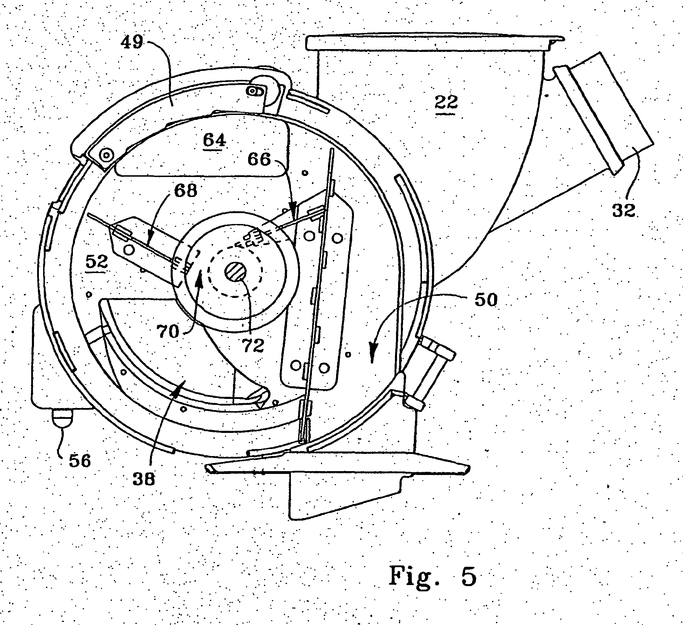

Das Messsystem 24 ist mit zwei zusätzlichen Bürstenzusammenbauten 66 und 68 ausgestattet, die zwischen dem Saatguthügel und der Öffnung 64 angeordnet sind. Die erste Bürste 66, wie in den Figuren 4 und 5 gezeigt, erstreckt sich von der 2-Uhr-Position nach unten und radial nach innen bis zu einer Stelle oberhalb der Antriebswelle 72 des Messsystems 24. Die zweite Bürste 68 erstreckt sich von der 10-Uhr-Position radial nach innen bis zu einer von der Antriebswelle 72 des Messsystems 24 beabstandeten Stelle. Eine Saatgutrücklauflücke 70 ist zwischen der Antriebswelle 72 und der zweiten Bürste 68 geformt. Die Saatgutrücklauflücke 70 wird verwendet, überschüssiges Saatgut, das durch den Zwillingseliminator 49 aus den Saatgutzellen freigesetzt wurde, zum Saatguthügel zurückzuführen. Als solche erstrecken sich die beiden Bürstenzusammenbauten 66 und 68 von den äußeren Bereichen der Säscheibe 40 in einem V nach unten und innen, wobei die Saatgutrücklauflücke 70 an der Spitze gebildet ist.

Nach einem Sävorgang wird die Vakuumquelle abgeschaltet, wodurch Saatgut von der Säscheibe 40 freigegeben wird. Saatgut, das oberhalb der ersten und zweiten Bürste 66 und 68 angeordnet ist, wird durch die Bürsten 66 und 68 zur Saatgutrücklauflücke 70 geleitet.

Wenn die Pflanzeinheit 16 aus ihrer horizontalen Arbeitsposition in ihre vertikale Transportposition geschwenkt wird, strömt das meiste Saatgut aus dem Saatguthügel durch den Durchlass 38 und wird durch die Leitwand 36 in den Behälter 22 der Pflanzeinheit 16 abgelenkt. Ein Teil des Saatguts verbleibt jedoch im Messsystem 24 und bildet einen kleineren Saatguthügel an der Trenn-Bürste 48 und der ersten Bürste 66, s. Figur 2. Die zweite Bürste 68 verhindert, dass Saatgut aus diesem kleineren Saatguthügel heraushüpft und in die Abgabezone 50 des Messsystems 24 fällt.

In einer anderen Ausführungsform könnte ein mechanisches Messsystem oder ein pneumatisches, mit Überdruck arbeitendes Messsystem an Stelle des oben beschriebenen, mit Unterdruck arbeitenden Messsystems 24 verwendet werden. Außerdem kann das Saatgut den individuellen Behältern 22 der Pflanzeinheiten 16 durch ein pneumatisches System auf Anfrage zugeführt werden, anstelle durch das mit Schwerkraft arbeitende Zuführsystem, das in der obigen Beschreibung offenbart ist.

## Patentansprüche

1. Messsystem (24) zum Abmessen von Saatgut, mit einem Gehäuse, einer im Gehäuse angeordneten Säscheibe (40), einem Einlass (38) im Gehäuse zum Empfang von Saatgut, das an einer Seite der Säscheibe (40) einen Saatguthügel bildet, einem Auslass des Gehäuses, durch den zugemessenes Saatgut abgegeben wird, einer ersten am Gehäuse befestigten Bürste (66), die sich in der horizontalen Arbeitsposition des Messsystems von der 2-Uhr-Position nach unten und radial nach innen entlang der Säscheibe (40) erstreckt, wobei ein Teil des Saatguts des Saatguthügels in einem von der ersten Bürste (66) geformten Transport-Saatguthügel gehalten wird, wenn das Messsystem (24) aus der horizontalen Arbeitsposition in eine vertikale Transportposition verschwenkt wird, wobei das Gehäuse ferner mit einer trennenden Bürste (48) ausgestattet ist, die sich in der Art einer Sehne entlang der Säscheibe (40) zum Auslass erstreckt und eine Abgabezone (50) des Messsystems (24) definiert, wobei die erste Bürste (66) und die trennende Bürste (48) zusammentreffen und die Begrenzungen des Transport-Saatguthügels bilden, **dadurch gekennzeichnet, dass** eine zweite Bürste (68) vorgesehen ist, die sich in der horizontalen Arbeitsposition des Messsystems von der 10-Uhr-Position nach unten und radial nach innen entlang der Säscheibe (40) erstreckt, wobei die erste Bürste (66) und die zweite Bürste (68) eine Saatgutrückkehrlücke (70) bilden, durch die Saatgut vom oberen Abschnitt der Säscheibe (40) zum Saatguthügel rückführbar ist.

2. Messsystem (24) nach Anspruch 1, **dadurch gekennzeichnet, dass** es ein Vakuummesssystem ist, wobei die Säscheibe (40) eine Vakuumseite und eine Saatguthügelseite hat und die erste Bürste (66), die zweite Bürste (68) und die trennende Bürste (48) die Saatguthügelseite berühren.

3. Sämaschine (10) mit einem Rahmen (12) und einer schwenkbar am Rahmen (12) befestigten _{P}flanzeinheit (16), die eine horizontale Arbeitsposition und eine vertikale Trans-portposition hat und mit einem Messsystem (24) zum Abmessen von Saatgut ausgestattet ist, **dadurch gekennzeichnet, dass** das Messsystem (24) nach einem der vorhergehenden Ansprüche ausgeführt ist.

4. Sämaschine (10) nach Anspruch 3, **dadurch gekennzeichnet, dass** am Rahmen (12) ein Hauptsaatgutbehälter (14) befestigt ist, und dass zwischen dem Hauptsaatgutbehälter (14) und dem Messsystem (24) der Pflanzeinheit (16) eine Verbindung zum Überführen von Saatgut aus dem Hauptsaatgutbehälter (14) zum Messsystem (24) der Pflanzeinheit (22) angeordnet ist.

5. Sämaschine (10) nach Anspruch 4, **dadurch gekennzeichnet, dass** die Verbindung zwischen dem Hauptsaatgutbehälter (14) und dem Messsystem (24) ein flexibles Rohr (18) ist.

6. Sämaschine (10) nach Anspruch 3 oder 4, **dadurch gekennzeichnet, dass** der Hauptbehälter (14) oberhalb der Pflanzeinheit (16) angeordnet ist, wenn sich die Pflanzeinheit (16) in ihrer horizontalen Arbeitsposition befindet, so dass Saatgut durch Schwerkraft durch die Verbindung vom Hauptbehälter (14) zur Pflanzeinheit (16) gefördert wird.

7. Sämaschine (10) nach einem der Ansprüche 3 bis 6, **dadurch gekennzeichnet, dass** die Pflanzeinheit (16) mit einem Behälter (22) für Saatgut ausgestattet ist.

8. Sämaschine (10) nach einem der Ansprüche 3 bis 7, **dadurch gekennzeichnet, dass** die Pflanzeinheit (16) durch ein Gestänge, insbesondere ein Parallelogrammgestänge (26), mit dem Rahmen (12) gekoppelt ist, welches der Pflanzeinheit (16) erlaubt, dem Boden zu folgen, wenn sie sich in der horizontalen Arbeitsposition befindet.

## Claims

1. Metering system (24) for metering seed, having a housing, having a sowing disc (40) arranged in the housing, having an inlet (38) in the housing for receiving seed, the seed forming a seed mound on one side of the sowing disc (40), having an outlet of the housing, through which outlet the metered seed is dispensed, having a first brush (66) which is fastened to the housing and which, when the metering system is in the horizontal position, extends from the two o'clock position downward and radially inward along the sowing disc (40), wherein, when the measurement system (24) is pivoted from the horizontal working position into a vertical transport position, a part of the seed of the seed mound is held in a transport seed mound formed by the first brush (66), wherein the housing is furthermore equipped with a separating brush (48) which extends in the manner of a chord along the sowing disc (40) to the outlet and defines a dispensing zone (50) of the metering system (24), wherein the first brush (66) and the separating brush (48) meet and form the boundaries of the transport seed mound, **characterized in that** a second brush (68) is provided which, when the metering system is in the horizontal working position, extends from the ten o'clock position downward and radially inward along the sowing disc (40), wherein the first brush (66) and the second brush (68) form a seed return gap (70) through which seed can be returned from the upper portion of the sowing disc (40) to the seed mound.

2. Metering system (24) according to Claim 1, **characterized in that** it is a vacuum-type metering system, wherein the sowing disc (40) has a vacuum side and a seed mound side, and the first brush (66), the second brush (68) and the separating brush (48) make contact with the seed mound side.

3. Sowing machine (10) having a frame (12) and having a planting unit (16) which is pivotably fastened to the frame (12) and which has a horizontal working position and a vertical transport position and which is equipped with a metering system (24) for metering seed, **characterized in that** the metering system (24) is designed according to one of the preceding claims.

4. Sowing machine (10) according to Claim 3, **characterized in that** a main seed container (14) is fastened to the frame (12) and **in that**, between the main seed container (14) and the metering system (24) of the planting unit (16), there is arranged a connection for transferring seed from the main seed container (14) to the metering system (24) of the planting unit (22).

5. Sowing machine (10) according to Claim 4, **characterized in that** the connection between the main seed container (14) and the metering system (24) is a flexible tube (18).

6. Sowing machine (10) according to Claim 3 or 4, **characterized in that**, when the planting unit (16) is situated in its horizontal working position, the main container (14) is arranged above the planting unit (16) such that seed is conveyed through the connection from the main container (14) to the planting unit (16) under the force of gravity.

7. Sowing machine (10) according to one of Claims 3 to 6, **characterized in that** the planting unit (16) is equipped with a container (22) for seed.

8. Sowing machine (10) according to one of Claims 3 to 7, **characterized in that** the planting unit (16) is coupled to the frame (12) by means of a linkage, in particular a parallelogram linkage (26), which allows the planting unit (16) to follow the ground when said planting unit is situated in the horizontal working position.

## Revendications

1. Système de dosage (24) pour doser des semences, comprenant un boîtier, un disque à graines (40) disposé dans le boîtier, une entrée (38) dans le boîtier pour recevoir les semences qui forment un tas de semences d'un côté du disque à graines (40), une sortie du boîtier à travers laquelle les semences dosées sont déchargées, une première brosse (66) fixée au boîtier, qui s'étend dans la position de travail horizontale du système de dosage depuis la position 2 heures vers le bas et radialement vers l'intérieur le long du disque à graines (40), une partie des semences du tas de semences étant retenue dans un tas de semences à transporter formé par la première brosse (66), lorsque le système de dosage (24) est pivoté depuis la position de travail horizontale dans une position de transport verticale, le boîtier étant en outre muni d'une brosse de séparation (48) qui s'étend à la manière d'une corde le long du disque à graines (40) jusqu'à la sortie, et définit une zone de décharge (50) du système de dosage (24), la première brosse (66) et la brosse de séparation (48) se réunissant et formant les limites du tas de semences à transporter, **caractérisé en ce qu'**une deuxième brosse (68) est prévue, laquelle s'étend dans la position de travail horizontale du système de dosage depuis la position 10 heures vers le bas et radialement vers l'intérieur le long du disque à graines (40), la première brosse (66) et la deuxième brosse (68) formant un espace vide de retour des semences (70) à travers lequel les semences peuvent être ramenées depuis la portion supérieure du disque à graines (40) jusqu'au tas de semences.

2. Système de dosage (24) selon la revendication 1, **caractérisé en ce qu'**il s'agit d'un système de dosage sous vide, le disque à graines (40) ayant un côté vide et un côté tas de semences, et la première brosse (66), la deuxième brosse (68) et la brosse de séparation (48) étant en contact avec le côté tas de semences.

3. Semoir (10) comprenant un châssis (12) et une unité de plantation (16) fixée au châssis (12) de manière pivotante, laquelle présente une position de travail horizontale et une position de transport verticale et est munie d'un système de dosage (24) pour doser des semences, **caractérisé en ce que** le système de dosage (24) est réalisé selon l'une quelconque des revendications précédentes.

4. Semoir (10) selon la revendication 3, **caractérisé en ce que** sur le châssis (12) est fixé un récipient de semences principal (14), et **en ce qu'**entre le récipient de semences principal (14) et le système de dosage (24) de l'unité de plantation (16) est disposée une liaison pour le transfert des semences depuis le récipient de semences principal (14) au système de dosage (24) de l'unité de plantation (16).

5. Semoir (10) selon la revendication 4, **caractérisé en ce que** la liaison entre le récipient de semences principal (14) et le système de dosage (24) est un tube flexible (18).

6. Semoir (10) selon la revendication 3 ou 4, **caractérisé en ce que** le récipient principal (14) est disposé au-dessus de l'unité de plantation (16) lorsque l'unité de plantation (16) se trouve dans sa position de travail horizontale, de sorte que les semences soient transportées sous l'effet de la force de pesanteur à travers la liaison du récipient principal (14) à l'unité de plantation (16).

7. Semoir (10) selon l'une quelconque des revendications 3 à 6, **caractérisé en ce que** l'unité de plantation (16) est munie d'un récipient (22) pour semences.

8. Semoir (10) selon l'une quelconque des revendications 3 à 7, **caractérisé en ce que** l'unité de plantation (16) est accouplée au châssis (12) par une tringlerie, notamment une tringlerie à parallélogramme (26), qui permet à l'unité de plantation (16) de suivre le sol lorsqu'elle se trouve dans la position de travail horizontale.
